# EUROPEAN PATENT SPECIFICATION

(11) **EP 2 872 355 B1**
(45) Date of publication and mention of the grant of the patent: **03.07.2019**
(21) Application number: 13724998.3
(22) Date of filing: 09.05.2013
(51) Int. Cl.: B60L 53/16

(54) **REMOTE ANNUNCIATOR FOR ELECTRIC VEHICLE SUPPLY EQUIPMENT**
FERNANSAGER FÜR VERSORGUNGSANLAGE FÜR ELEKTROFAHRZEUG
DISPOSITIF D'ANNONCE À DISTANCE POUR ÉQUIPEMENT D'ALIMENTATION DE VÉHICULE ÉLECTRIQUE

(30) Priority: 16.07.2012 US 201213549899
(43) Date of publication of application: 20.05.2015
(73) Proprietor: Eaton Corporation, Cleveland, OH 44122 (US)
(72) Inventor: NITZBERG, Jason-David, Batavia, Ohio 45103 (US); ROGERS, Brandon J., Senoia GA 30276-2353 (US)
(74) Representative: Schwan Schorer & Partner mbB
(86) International application number: PCT/US2013/040277
(87) International publication number: WO 2014/014553

(56) References cited:
- WO-A2-2013/121472
- US-A1- 2010 174 667
- US-A1- 2011 074 351
- US-A1- 2011 172 839
- US-A1- 2011 204 849
- US-A1- 2011 320 056
- US-A1- 2012 091 958
- US-A1- 2012 116 745

## Description

### BACKGROUND

### Field

The disclosed concept pertains generally to electric vehicle supply equipment and, more particularly, to annunciation circuits for electric vehicle supply equipment.

### Background Information

An electric vehicle (EV) charging station, also called an EV charging station, electric recharging point, charging point, and EVSE (Electric Vehicle Supply Equipment), is an element in an infrastructure that supplies electric energy for the recharging of electric vehicles, plug-in hybrid electric-gasoline vehicles, or semi-static and mobile electrical units such as exhibition stands.

An EV charging station is device that safely allows electricity to flow. These charging stations and the protocols established to create them are known as EVSE, and they enhance safety by enabling two-way communication between the charging station and the electric vehicle.

The 1996 NEC and California Article 625 define EVSE as being the conductors, including the ungrounded, grounded, and equipment grounding conductors, the electric vehicle connectors, attachment plugs, and all other fittings, devices, power outlets or apparatus installed specifically for the purpose of delivering energy from premises wiring to an electric vehicle.

EVSE is defined by the Society of Automotive Engineers (SAE) recommended practice J1772 and the National Fire Protection Association (NFPA) National Electric Code (NEC) Article 625. While the NEC defines several safety requirements, J1772 defines the physical conductive connection type, five pin functions (i.e., two power pins (Hotl and Hot2 or neutral; or Line 1 and Line 2), one ground pin, one control pilot pin, and one proximity pin), the EVSE to EV handshake over the pilot pin, and how both parts (EVSE and EV) are supposed to function.

Two-way communication seeks to ensure that the current passed to the EV is both below the limits of the EV charging station itself and below the limits of what the EV can receive. There are additional safety features, such as a safety lock-out, that does not allow current to flow from the EV charging station until the EV connector or EV plug is physically inserted into the EV and the EV is ready to accept energy.

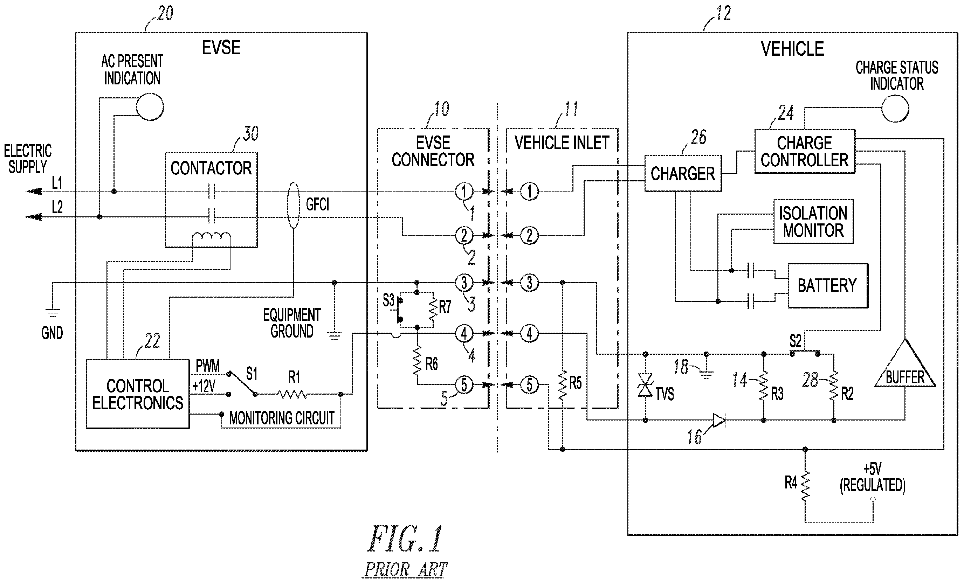

J1772 in North America and IEC 61851 standard use a very simple but effective pilot circuit and handshake in the EVSE. For charging a vehicle using alternating current (AC), basically a signal is generated on the pilot pin 4 of Figure 1, 12 Vdc open circuit when measured to ground pin 3. When the EVSE cable and connector 10 is plugged into an EV inlet 11 of a compliant vehicle 12, the vehicle's circuit has a resistor 14 and a diode 16 in series that ties to ground 18 in order to drop the 12 Vdc to 9 Vdc. After the EVSE 20 sees this drop in voltage, it turns on a pulse-width modulated (PWM) generator 22 that defines the maximum available line current (ALC) on the charging circuit. The vehicle charge controller 24 reads the percentage of the duty cycle of the PWM signal, which is equivalent to a certain amperage, and sets the maximum current draw on the onboard vehicle rectifier/charger 26, in order to not trip an upstream circuit interrupter (not shown). The vehicle 12, in turn, adds another resistor 28 in parallel with the resistor 14 of the vehicle's resistor and diode 14,16 series combination, which then drops the top level of the PWM pilot signal to 6 Vdc. This tells the EVSE 20 that the vehicle 12 is ready to charge. In response, the EVSE 20 closes an internal relay/contactor 30 to allow AC power to flow to the vehicle 12.

EV charging stations consist generally of a completely separate and special box with indicators for power and state along with a connected EV cable/connector for the intended purpose of charging the vehicle Examples of displays and indicators associated with an EV charging station are disclosed in the US patent applications US2012/091958 A1 (Ichikawa et al.) and US2011/172839 A1 (Brown et al.).

There is room for improvement in EVSE including, for example, electric vehicle connectors for charging electric vehicles.

### SUMMARY

This need and others are met by embodiments of the disclosed concept in which a user interface of the EVSE is disposed remote from the EVSE (e.g., without limitation, on or about the EV connector), which allows the electronics of the EVSE to be hidden (e.g., without limitation, in a load center) or to not require a local user interface at the EVSE.

In accordance with the disclosed concept, a remote annunciator for electric vehicle supply equipment is provided as it is defined in claim 1.

In the remote annunciator disclosed herein, the housing may form an electric vehicle connector; and the interface may be remotely electrically connected to the electric vehicle supply equipment, or the housing may form a cable hook for an electric vehicle cable, or
the housing may form an electric vehicle receptacle.

Preferred embodiments are defined in the dependent claims.

The circuit may comprise a reset input structured to reset the electric vehicle supply equipment.

The circuit may comprise a power source including a voltage derived independently from the power conductors of the interface.

### BRIEF DESCRIPTION OF THE DRAWINGS

A full understanding of the disclosed concept can be gained from the following description of the preferred embodiments when read in conjunction with the accompanying drawings in which:
Figure 1 is a block diagram in schematic form of an electric vehicle supply equipment (EVSE) to electric vehicle (EV) system having a pilot pin as defined by J1772.
Figure 2 is an isometric view of an EV cord and EV connector including a plurality of indicators and a reset button in accordance with an embodiment of the disclosed concept.
Figure 3 is a vertical elevation view of an EV cord hanger for an EV cord including a plurality of indicators and a reset button in accordance with another embodiment of the disclosed concept.
Figure 4 is a vertical elevation view of an EV receptacle for an EV cable with a connector for an EVSE cable and a connector for the EV cable.
Figure 5 is a block diagram of a discriminator circuit and a reset circuit for the EV devices of Figures 2-4.
Figure 6 is a block diagram of another reset circuit for the EV devices of Figures 2-4.
Figure 7 is a block diagram of another discriminator circuit and a reset circuit for the EV devices of Figures 2-4.

### DESCRIPTION OF THE PREFERRED EMBODIMENTS

As employed herein, the term "number" shall mean one or an integer greater than one (*i.e*., a plurality).

As employed herein, the term "processor" shall mean a programmable analog and/or digital device that can store, retrieve, and process data; a computer; a workstation; a personal computer; a microprocessor; a microcontroller; a microcomputer; a central processing unit; a mainframe computer; a mini-computer; a server; a networked processor; or any suitable processing device or apparatus.

As employed herein, the statement that two or more parts are "connected" or "coupled" together shall mean that the parts are joined together either directly or joined through one or more intermediate parts. Further, as employed herein, the statement that two or more parts are "attached" shall mean that the parts are joined together directly.

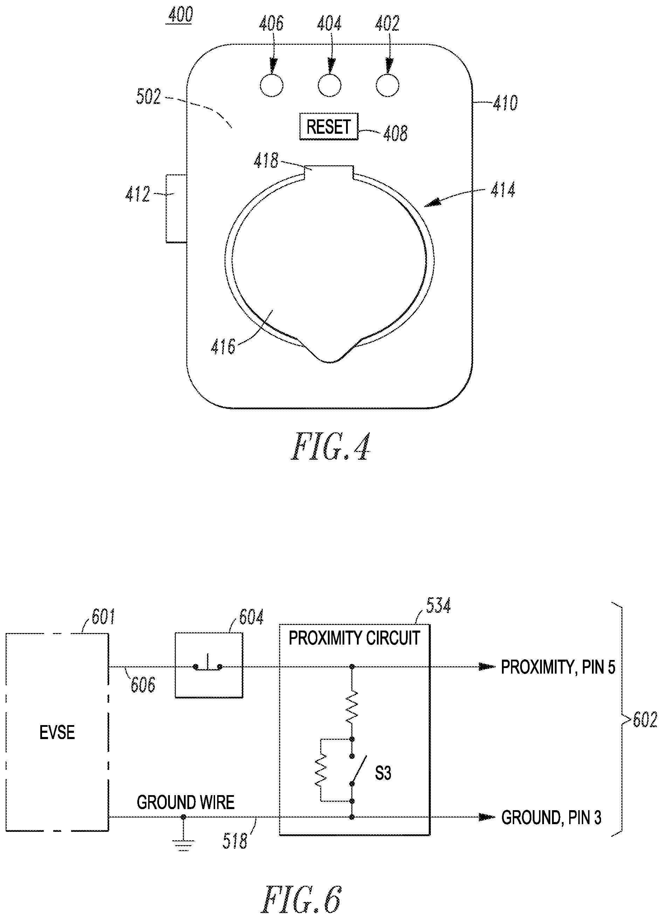

For electric vehicle (EV) supply equipment (EVSE) (see, for example, 601 of Figure 6) to successfully communicate the EV charging state to a user, there is a need for a remote annunciator if the EVSE itself does not have a local annunciator or if it is hidden from view. For example, if the EVSE is installed within breaker panels, panelboards and load centers, a local annunciator would be hidden behind a metal door. The disclosed concept provides a remote annunciator that allows a user to see the status of the EV charging process and can optionally provide a user input to reset an EVSE fault.

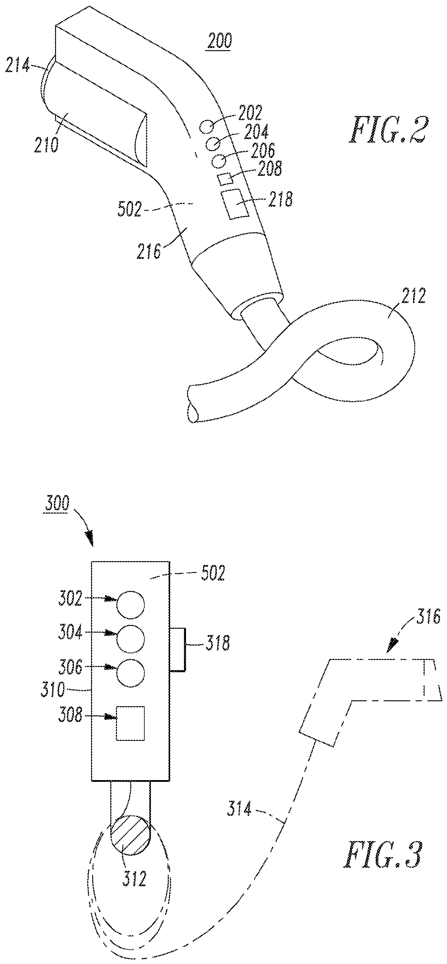

For example and without limitation, the remote annunciator can be built into: (1) an EV connector 200 as shown in Figure 2; (2) a cord hanger 300 as shown in Figure 3; or (3) an EV receptacle 400 for an EV cable (not shown) as shown in Figure 4.

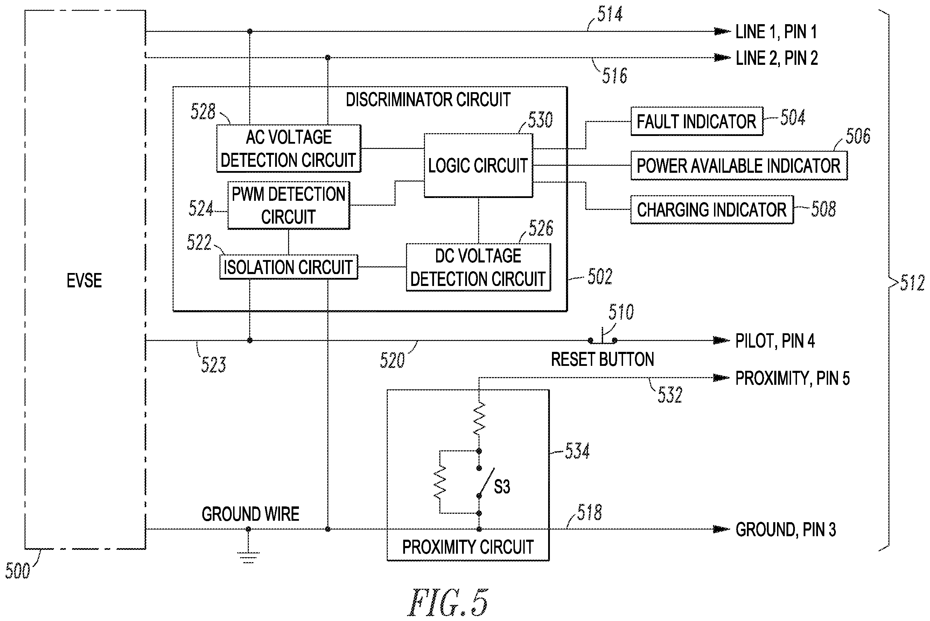

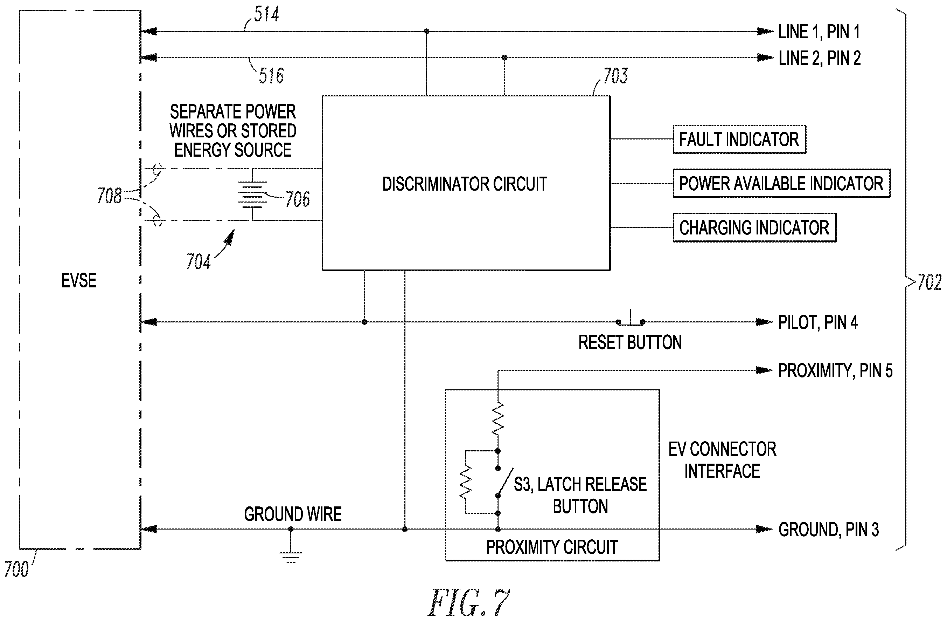

The example remote annunciators of Figures 2-4 can be employed as part of or with any suitable EV supply equipment (EVSE), such as 500 (shown in phantom line drawing) (Figure 5), 601 (shown in phantom line drawing) (Figure 6), or 700 (shown in phantom line drawing) (Figure 7).

The disclosed concept uses the existing power and control wires (i.e., conductors corresponding to some or all of the pins 1-5 of Figure 1) present in a standard J1772-compliant connector (such as the EVSE connector 10 of Figure 1), adds an example discriminator circuit (such as the circuit 502 of Figure 5) that determines when a number of a plurality of indicators (such as indicators 504,506,508 of Figure 5) are activated, and optionally causes a reset (such as from reset button 510 of Figure 5) to occur naturally without any change of EVSE programming. In other words, the disclosed EV connector (such as 512 of Figure 5, 602 of Figure 6, or 702 of Figure 7) can be a direct replacement for any standard J1772-compliant EV connector. The disclosed concept reuses existing power (i.e., conductors corresponding to some or all of the pins 1-3 of Figure 1) and control wires (i.e., conductors corresponding to one or both of the pins 4 and 5 of Figure 1) of a standard J1772-compliant connector to lower cost by use of the disclosed discriminator circuit 502, as opposed to known prior proposals that require additional dedicated wiring between EVSE and corresponding status indicators.

### Example 1

Figure 2 shows an example fault indicator 202, a power available indicator 204, a charging indicator 206, and a reset / override button 208 of the example EV connector 200. In this example embodiment, the EV connector 200 is a remote annunciator for electric vehicle supply equipment (not shown, but see EVSE 20 of Figure 1). The EV connector 200 includes a housing 210 and an interface 212 to the EVSE consisting of a number of power conductors (e.g., 514 and 516 of Figure 5), a number of ground conductors (e.g., 518 of Figure 5), and a number of control conductors (e.g., 520 of Figure 5). As will be explained, the indicators 202,204,206 on the housing 210 are structured to provide a remote annunciation function for the EVSE. A circuit (e.g., the discriminator circuit 502 of Figure 5) is structured to drive the indicators 202,204,206 (as shown by the indicators 504,506,508 of Figure 5). As will also be explained, the circuit 502 drives the indicators 504,506,508 based upon information from only the number of power conductors (e.g., 514 and 516 of Figure 5), the number of ground conductors (e.g., 518 of Figure 5), and the number of control conductors (e.g., 520 of Figure 5), which have a J1772-compliant control function other than driving the indicators 504,506,508.

In this example, the housing 210 of Figure 2 forms an electric vehicle connector 214, and the interface 212 is remotely electrically connected to the electric vehicle supply equipment (not shown, but see EVSE 20 of Figure 1). The electric vehicle connector 214 is a J1772-compliant connector.

### Example 2

Figure 3 shows an example fault indicator 302, a power available indicator 304, a charging indicator 306, and an optional reset / override button 308 of a cable hook, such as the example cord hanger 300, which forms a remote annunciator embedded into the housing 310. The housing 310 forms a cable hook portion 312 for an electric vehicle cable 314 (shown in phantom line drawing) having a J1772-compliant connector 316 (shown in phantom line drawing) for an electric vehicle (not shown, but see the vehicle 12 of Figure 1). The housing 310 also includes a connector 318 that forms an interface to and from electric vehicle supply equipment (not shown, but see EVSE 20 of Figure 1).

### Example 3

Figure 4 shows an example fault indicator 402, a power available indicator 404, a charging indicator 406, and an optional reset / override button 408 of the EV receptacle 400, which forms a remote annunciator embedded into a housing 410. The housing 410 forms the EV receptacle 400 and includes a first connector 412 for the interface from the electric vehicle supply equipment (not shown, but see EVSE 20 of Figure 1) and a second connector 414 for a cable and a connector (not shown, but see the cable 314 and connector 316 of Figure 3) to an electric vehicle (not shown, but see the vehicle 12 of Figure 1). The second connector 414 is hidden by a weather cover 416 mounted on pivot 418. The cover 416 can be pivoted upward (not shown) to uncover the second connector 414. This type of connector is usually found in IEC territories as defined by IEC 61851 and 62196, but is electrically compatible with the J1772 standard.

### Example 4

Referring to Figure 5, the example discriminator circuit 502 is shown including an isolation circuit 522 to protect a sensitive pulse width modulated signal 523 generated by the EVSE 500 on the pilot wire 520 and the ground wire 518 from the effects of reading, a pulse width modulation (PWM) detection circuit 524, a DC voltage detection circuit 526, an AC voltage detection circuit 528, and a logic circuit 530. The logic circuit 530 can be a processor or any other suitable logic or processing circuit.

In this example, the pilot wire 520 is a control conductor including the pulse width modulated signal 523 from the EVSE 500, and the ground wire 518 is a ground conductor. The AC voltage detection circuit 528 detects an AC voltage between Line 1 and Line 2 of the power conductors 514,516. Alternatively, the AC voltage detection circuit 528 can detect an AC voltage between two or more power conductors (e.g., without limitation, three-phase power conductors). The PWM detection circuit 524 and the DC voltage detection circuit 526 are both coupled between the isolation circuit 522 and the logic circuit 530. The logic circuit 530 inputs from the PWM detection circuit 524, the DC voltage detection circuit 526 and the AC voltage detection circuit 528, and outputs to the fault indicator 504, the power available indicator 506 and the charging indicator 508. The DC voltage detection circuit 526 detects the peak positive-most voltage, even when the PWM signal 523 on pilot wire 520 has a non-zero or non-100% duty cycle.

The logic circuit 530 turns the charging indicator 508 "on" when the AC voltage detection circuit 528 detects a non-zero standard line voltage (e.g., without limitation, 120 Vac, 208 Vac, 230 Vac, 240 Vac). Since the EVSE 500 employs interlocked power wires 514,516, any time Line 1 and Line 2 have voltage on them, the making and breaking element (not shown, but see the contactor 30 of Figure 1) of the EVSE 500 has closed and vehicle charging is occurring.

Alternatively, the logic circuit 530 turns the charging indicator 508 "on" when the DC voltage detection circuit 526 detects a peak value of about +6 Vdc or a peak value of about +3 Vdc on the pilot wire 520, and the PWM detection circuit 524 detects a pulse width that is non-100% (or non-0%). Per the SAE J1772 and IEC 61851 standards, charging is also defined as when the pilot wire 520 is in one of these two states.

The logic circuit 530 turns the power available indicator 506 "on" when: (1) the DC voltage detection circuit 526 detects about +12 Vdc on the pilot wire 520 and the PWM detection circuit 524 detects a duty cycle of 100% (or 0% or no PWM) (e.g., the EV connector 512 is not plugged into the vehicle; the vehicle is not detected), or (2) the DC voltage detection circuit 526 detects about +9 Vdc on the pilot wire 520 and the PWM detection circuit 524 detects a duty cycle of non-100% (or non-0%) (e.g., the vehicle is connected but not ready for charging). Per the SAE J1772 and IEC 61851 standards, power available is defined as when the pilot wire 520 is in one of these two states.

The logic circuit 530 turns the fault indicator 504 "on" when the DC voltage detection circuit 526 detects about +9 Vdc, about +6 Vdc or about +3 Vdc on the pilot wire 520, and the PWM detection circuit 524 detects a duty cycle of 100% (or 0% or no PWM). Per the SAE J1772 and IEC 61851 standards, a minor fault (e.g., without limitation, a ground fault) is defined as when the pilot wire 520 is in one of these states.

Alternatively, the logic circuit 530 turns the fault indicator 504 "on" and "off' repeatedly (i.e., blinking) when the DC voltage detection circuit 526 detects about -12 Vdc on the pilot wire 520. Per the SAE J1772 and IEC 61851 standards, a permanent fault (e.g., without limitation, a contactor failure) is defined as when the pilot wire 520 is in this state.

Preferably, the logic circuit 530 is structured to activate only one of the fault indicator 504, the power available indicator 506 and the charging indicator 508 at any one time, and is further structured to give priority to activation of the fault indicator 504, the power available indicator 506 and the charging indicator 508 first to the fault indicator 504, second to the charging indicator 508, and third to the power available indicator 506. In this manner, only one of the three example indicators 504,506,508 is "on" at any one time, with the precedence of indication being in the order: (1) the fault indicator 504, (2) the charging indicator 508, and (3) the power available indicator 506. For example, if both of the fault indicator 504 and the charging indicator 508 were sought to be activated at the same time, then only the higher priority fault indicator 504 would be activated.

Alternatively, the fault indicator 504, the charging indicator 508 and the power available indicator 506 can be activated independently of each other, such that any suitable number of the indicators are activated.

As will be described, the reset button 510 provides a manual reset input structured to reset the EVSE 500. The reset button 510 provides a way for a user who observes the fault indicator 504 being in the "on" state to have an immediate way of manually resetting the fault. The alternative is simply waiting for an automatic reset of the EVSE 500 if the EVSE is equipped with such a feature. As shown in Figure 5, the example reset button 510 is a momentary, normally closed switch that opens the pilot wire 520 back to the EVSE 500. Usually, when the electric vehicle (not shown, but see the vehicle 12 of Figure 1) or EVSE 500 detects the pilot signal 523 is an open circuit, it means that the EV connector 512 has been unplugged. Because the reset button 510 is normally closed, after pressing the momentary button and opening the pilot wire 520, the pilot signal 523 returns closed as if the electric vehicle and the EVSE 500 were re-mated. Therefore, no other alternative programming in the electric vehicle or the EVSE 500 is needed and the reset button 510 is backwards compatible to all known EVSE and EV.

Alternatively, the reset button 510 can be interlocked with the logic circuit 530, thereby only enabling operation of the reset button 510 when the fault indicator 504 is active.

### Example 5

Alternatively, another reset button 604 is shown in Figure 6. This uses the conventional proximity circuit 534 of Figure 5 in a different manner. In most EVSE, like the EVSE 500 of Figure 5, the proximity wire 532 is internal to the EV connector 512 (or internal to housing 210 of Figure 2, internal to housing 310 of Figure 3, or internal to housing 410 of Figure 4) and provides a resistance for the EV (not shown, but see the vehicle 12 of Figure 1) to realize that the EV connector 512 is plugged in. However, for certain EVSE, such as 601, the proximity wire 606 is also monitored by the EVSE 601; hence, there is a fifth wire run back to the EVSE 601. The reset button 604, as shown in Figure 6, breaks the signal of the proximity wire 606, thereby indicating to a properly configured EVSE 601 that it should be reset. It is believed that this is not a known behavior, and otherwise would usually be viewed as a fault. As a result, suitable programming is added to the EVSE 601 to trigger the desired reset operation. Here, the reset button 604 provides feedback by adding a normally closed switch to the optional proximity wire 606 to the EVSE 601. Otherwise, Figure 6 shows the conventional proximity circuit 534 that resides in the J1772 EV connector 602, and its conventional S3 release latch, which is open when the EV connector 602 is installed at the vehicle.

### Example 6

In one embodiment, the three indicators 202,204,206 (Figure 2) are three individual LED indicators with suitable words disposed underneath facing the user holding the handle 216 of the EV connector 200. The indicator closest to the nozzle end (e.g., closest the electric vehicle connector 214 of Figure 2) is colored, for example, red, with the word "Trouble" corresponding to the fault indicator 202, the next indicator toward the handle 216 is colored, for example, yellow, with the word "Ready" corresponding to the power available indicator 204, and the indicator closest to the handle 216 of the EV connector 200 is colored green, with the word "Charging" corresponding to the charging indicator 206. Also, the reset button 208 is located underneath the charging indicator 206, but above the conventional EV connector release latch 218, is colored pink, and has the word 'Reset' molded into the button 208 with a suitable raised type.

Alternatively, the example indicators 202,204,206 could take the form of single LED bands that encircle the outside of the EV connector, or a suitable backlit material having a suitable shape in the form of, for example and without limitation, logos, icons, text or other suitable symbols to convey the state of the EV charging process.

### Example 7

As shown in Figure 7, the discriminator circuit 703, which can be similar to the discriminator circuit 502 of Figure 5, can have a separately derived power source 704 other than from the voltages present in the EV connector 702. The power source 704 can be an example battery 706, as shown operatively associated with the circuit 703, or can be sourced from separate power conductors 708 (shown in phantom line drawing) provided to it from the EVSE 700. In this manner, the voltage of the power source 704 is derived independently from the power conductors 514,516 of the EV connector 702.

While specific embodiments of the disclosed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed concept which is to be given the full breadth of the claims appended and any and all equivalents thereof.

## Claims

1. A remote annunciator (200; 300; 400) for electric vehicle supply equipment (500; 601; 700), the remote annunciator being disposed remote from the electric vehicle supply equipment, said remote annunciator comprising:
a housing (210; 310; 410);
an interface (212; 318; 412) structured to electrically connect to said electric vehicle supply equipment, said interface consisting of a number of power conductors (514, 516), a number of ground conductors (518), and a number of control conductors (520, 606) including a pilot conductor (520) including a pulse width modulated signal (523) from said electric vehicle supply equipment;
a plurality of indicators (202, 204, 206; 302, 304, 306; 402, 404, 406; 504, 506, 508) on said housing structured to provide a remote annunciation function in which annunciation for said electric vehicle supply equipment is provided remote from the electric vehicle supply equipment; and
a circuit (502; 703) structured to drive said indicators, the circuit including a pulse width modulation detection circuit (524) structured to detect a duty cycle of the pulse width modulated signal on the pilot conductor,
wherein said number of control conductors have a control function other than driving said indicators.
said remote annunciator **characterized in that**:
said circuit (502; 703) further includes a direct current voltage detection circuit (526) structured to detect a direct current voltage on the pilot conductor, wherein said circuit drives said indicators based upon at least one of the detected duty cycle of the pulse width modulated signal and the detected direct current voltage on the pilot conductor, and
said housing (210) forms an electric vehicle connector (214); and wherein said interface (212) is remotely electrically connected to said electric vehicle supply equipment, or
said housing (310) forms a cable hook (312) for an electric vehicle cable (314), or a first connector (412) for said interface from said electric vehicle supply equipment and a second connector (414) for a cable (314) and a connector (316) to an electric vehicle, or
said housing (310) comprises a connector (318) for said interface from said electric vehicle supply equipment, or said housing (410) forms an electric vehicle receptacle.

2. The remote annunciator (200; 300; 400) of Claim 1 wherein said circuit comprises a reset input (510; 604) structured to reset said electric vehicle supply equipment.

3. The remote annunciator (200; 300; 400) of Claim 1 wherein said circuit (703) comprises a power source (704) including a voltage derived independently from the power conductors of said interface.

4. The remote annunciator (200; 300; 400) of Claim 3 wherein the power source is a battery (706) operatively associated with said circuit or a plurality of power conductors (708) separate from the power conductors of said interface.

5. The remote annunciator (200; 300; 400) of Claim 1 wherein said number of ground conductors comprises a ground conductor (518); and wherein said circuit comprises an isolation circuit (522) for the pulse width modulated signal and the ground conductor, an alternating current voltage detection circuit (528), and a logic circuit (530).

6. The remote annunciator (200; 300; 400) of Claim 5 wherein the number of power conductors is at least two power conductors (514, 516); and wherein the alternating current voltage detection circuit is structured to detect an alternating current voltage on said at least two power conductors.

7. The remote annunciator (200; 300; 400) of Claim 5 wherein the pulse width modulation detection circuit and the direct current voltage detection circuit are both coupled between the isolation circuit and the logic circuit.

8. The remote annunciator (200; 300; 400) of Claim 5 wherein the plurality of indicators is a fault indicator (504), a power available indicator (506) and a charging indicator (508); and wherein the logic circuit inputs from the pulse width modulation detection circuit, the direct current voltage detection circuit and the alternating current voltage detection circuit, and outputs to the fault indicator, the power available indicator and the charging indicator.

9. The remote annunciator (200; 300; 400) of Claim 8 wherein the logic circuit is structured to turn on the charging indicator when the alternating current voltage detection circuit detects a non-zero line voltage on the two power conductors; turn on the charging indicator when the direct current voltage detection circuit detects a value of direct current voltage of about +6 Vdc or about +3 Vdc on the pilot conductor, and the pulse width modulation detection circuit detects a value of the duty cycle of the pulse width modulated signal that is different from 0% or 100%; turn on the power available indicator when: (1) the direct current voltage detection circuit detects a value of direct current of about +12 Vdc on the pilot conductor and the pulse width modulation detection circuit detects a value of the duty cycle of the pulse width modulated signal that is 0% or 100%; or (2) the direct current voltage detection circuit detects a value of direct current voltage of about +9 Vdc on the pilot conductor and the pulse width modulation detection circuit detects a value of the duty cycle of the pulse width modulated signal that is different from 0% or 100%; turn on the fault indicator when the direct current voltage detection circuit detects a value of direct current voltage of about +9 Vdc, about +6 Vdc or about +3 Vdc on the pilot conductor, and the pulse width modulation detection circuit detects a value of the duty cycle of the pulse width modulated signal that is 0% or 100%; blink the fault indicator when the direct current voltage detection circuit detects a value of direct current voltage of about -12 Vdc on the pilot conductor; or activate only one of the fault indicator, the power available indicator and the charging indicator at any one time.

10. The remote annunciator (200; 300; 400) of Claim 8 wherein the logic circuit is further structured to give priority to activation of the fault indicator, the power available indicator and the charging indicator first to the fault indicator, second to the charging indicator, and third to the power available indicator; or wherein the logic circuit is structured to independently activate any number of the fault indicator, the power available indicator and the charging indicator.

11. The remote annunciator (200; 300; 400) of Claim 3 wherein said number of control conductors comprises a pilot conductor (520) including a pulse width modulated signal (523) from said electric vehicle supply equipment; and wherein the reset input (510) is a momentary, normally closed switch (510) that opens the pilot conductor back to said electric vehicle supply equipment.

12. The remote annunciator (200; 300; 400) of Claim 3 wherein said number of control conductors comprises a proximity conductor (606) from an electric vehicle to said electric vehicle supply equipment (601); wherein the reset input (604) is a momentary, normally closed switch that opens the proximity conductor; and wherein the proximity conductor is monitored by said electric vehicle supply equipment.

## Patentansprüche

1. Fernsignalgeber (200; 300; 400) für Elektrofahrzeug-Versorgungsausrüstung (500; 601; 700), wobei der Fernsignalgeber entfernt von der Elektrofahrzeug-Versorgungsausrüstung angeordnet ist, wobei der Fernsignalgeber Folgendes umfasst:
ein Gehäuse (210; 310; 410);
eine Schnittstelle (212; 318; 412), die so strukturiert ist, dass sie eine elektrische Verbindung zu der Elektrofahrzeug-Versorgungsausrüstung herstellt, wobei die Schnittstelle aus einer Anzahl vom Stromleitern (514, 516), einer Anzahl von Erdleitern (518) und einer Anzahl von Steuerleitern (520, 606) einschließlich eines Pilotleiters (520) einschließlich eines pulsbreitenmodulierten Signals (523) von der Elektrofahrzeug-Versorgungsausrüstung besteht;
eine Vielzahl von Indikatoren (202, 204, 206; 302, 304, 306; 402, 404, 406; 504, 506, 508) an dem Gehäuse, die so strukturiert sind, dass sie eine Fernsignalgebungsfunktion bereitstellen, in der eine Fernsignalgebung für die Elektrofahrzeug-Versorgungsausrüstung entfernt von der Elektrofahrzeug-Versorgungsausrüstung bereitgestellt ist; und
einen Kreis (502; 703), der so strukturiert ist, dass er die Indikatoren antreibt, wobei der Kreis einen Pulsbreitenmodulation-Erkennungskreis (524) beinhaltet, der so strukturiert ist, dass er an dem Pilotleiter einen Arbeitszyklus des pulsbreitenmodulierten Signals erkennt,
wobei die Anzahl der Steuerleiter eine andere Steuerfunktion als das Antreiben der Indikatoren hat, wobei der Fernsignalgeber **dadurch gekennzeichnet ist, dass**:
der Kreis (502; 703) ferner einen Gleichspannung-Erkennungskreis (526) beinhaltet, der so strukturiert ist, dass er an dem Pilotleiter eine Gleichspannung erkennt,
wobei der Kreis die Indikatoren auf der Grundlage mindestens des erkannten Arbeitszyklus des pulsbreitenmodulierten Signals und/oder der erkannten Gleichspannung an dem Pilotleiter antreibt, und
das Gehäuse (210) einen Elektrofahrzeugstecker (214) bildet; und wobei die Schnittstelle (212) entfernt elektrisch mit der Elektrofahrzeug-Versorgungsausrüstung verbunden ist, oder
das Gehäuse (310) einen Kabelhaken (312) für ein Elektrofahrzeugkabel (314) bildet, oder einen ersten Stecker (412) für die Schnittstelle von der Elektrofahrzeug-Versorgungsausrüstung und einen zweiten Stecker (414) für ein Kabel (314) und einen Stecker (316) zu einem Elektrofahrzeug, oder
das Gehäuse (310) einen Stecker (318) für die Schnittstelle von der Elektrofahrzeug-Versorgungsausrüstung umfasst, oder das Gehäuse (410) eine Elektrofahrzeug-Steckdose bildet.

2. Fernsignalgeber (200; 300; 400) nach Anspruch 1, wobei der Kreis einen Rücksetzeingang (510; 604) umfasst, der strukturiert ist, um die Elektrofahrzeug-Versorgungsausrüstung zurückzusetzen.

3. Fernsignalgeber (200; 300; 400) nach Anspruch 1, wobei der Kreis (703) eine Stromquelle (704) umfasst, die eine Spannung beinhaltet, die unabhängig von den Stromleitern der Schnittstelle abgeleitet ist.

4. Fernsignalgeber (200; 300; 400) nach Anspruch 3, wobei die Stromquelle eine Batterie (706) ist, die dem Kreis oder einer Vielzahl von Stromleitern (708) separat von den Stromleitern der Schnittstelle operativ zugeordnet ist.

5. Fernsignalgeber (200; 300; 400) nach Anspruch 1, wobei die Anzahl von Erdleitern einen Erdleiter (518) umfasst; und wobei der Kreis einen Isolationskreis (522) für das pulsbreitenmodulierte Signal und den Masseleiter, einen Wechselspannung-Erkennungskreis (528) und einen Logikkreis (530) umfasst.

6. Fernsignalgeber (200; 300; 400) nach Anspruch 5, wobei die Anzahl der Stromleiter bei mindestens zwei Stromleitern (514, 516) liegt; und wobei der Wechselspannung-Erkennungskreis strukturiert ist, um an den mindestens zwei Stromleitern eine Wechselspannung zu erkennen.

7. Fernsignalgeber (200; 300; 400) nach Anspruch 5, wobei der Pulsbreitenmodulation-Erkennungskreis und der Gleichspannung-Erkennungskreis beide zwischen den Isolationskreis und den Logikkreis gekoppelt sind.

8. Fernsignalgeber (200; 300; 400) nach Anspruch 5, wobei die Vielzahl von Indikatoren einen Fehlerindikator (504), einen Stromverfügbarkeitsindikator (506) und einen Ladeindikator (508) umfasst; wobei der Logikkreis Eingaben von dem Pulsbreitenmodulation-Erkennungskreis, dem Gleichspannung-Erkennungskreis und dem Wechselspannung-Erkennungskreis erhält und Ausgaben an den Fehlerindikator, den Stromverfügbarkeitsindikator und den Ladeindikator abgibt.

9. Fernsignalgeber (200; 300; 400) nach Anspruch 8, wobei der Logikkreis so strukturiert ist, dass er den Ladeindikator einschaltet, wenn der Wechselspannung-Erkennungskreis an den zwei Stromleitern eine von null verschiedene Leitungsspannung erkennt; den Ladeindikator einschaltet, wenn der Gleichspannung-Erkennungskreis an dem Pilotleiter einen Gleichspannungswert von etwa +6 V oder etwa +3 V erkennt, und der Pulsbreitenmodulation-Erkennungskreis einen Wert des Arbeitszyklus des pulsbreitenmodulierten Signals erkennt, der von 0 % oder 100 % verschieden ist; dass er den Stromverfügbarkeitsindikator einschaltet, wenn: (1) der Gleichspannung-Erkennungskreis an dem Pilotleiter einen Gleichspannungswert von etwa +12 V erkennt und der Pulsbreitenmodulation-Erkennungskreis einen Wert des Arbeitszyklus des pulsbreitenmodulierten Signals erkennt, der 0 % oder 100 % ist; oder (2) der Gleichspannung-Erkennungskreis an dem Pilotleiter einen Gleichspannungswert von etwa +9 V erkennt und der Pulsbreitenmodulation-Erkennungskreis einen Wert des Arbeitszyklus des pulsbreitenmodulierten Signals erkennt, der von 0 % oder 100 % verschieden ist; dass er den Fehlerindikator einschaltet, wenn der Gleichspannung-Erkennungskreis an dem Pilotleiter einen Gleichspannungswert von etwa +9 V, etwa +6 V oder etwa +3 V erkennt, und der Pulsbreitenmodulation-Erkennungskreis einen Wert des Arbeitszyklus des pulsbreitenmodulierten Signals erkennt, der 0 % oder 100 % ist; dass er den Fehlerindikator zum Blinken bringt, wenn der Gleichspannung-Erkennungskreis an dem Pilotleiter einen Gleichspannungswert von etwa -12 V erkennt; oder dass er jeweils nur entweder den Fehlerindikator, den Stromverfügbarkeitsindikator oder den Ladeindikator aktiviert.

10. Fernsignalgeber (200; 300; 400) nach Anspruch 8, wobei der Logikkreis so strukturiert ist, dass die Priorität der Aktivierung des Fehlerindikators, des Stromverfügbarkeitsindikators und des Ladeindikators eine solche ist, dass als erster der Fehlerindikator, als zweiter der Ladeindikator und als dritter der Stromverfügbarkeitsindikator aktiviert wird; oder wobei der Logikkreis ferner so strukturiert ist, dass unabhängig jegliche Anzahl von Fehlerindikator, Stromverfügbarkeitsindikator und Ladeindikator aktiviert wird.

11. Fernsignalgeber (200; 300; 400) nach Anspruch 3, wobei die Anzahl der Steuerleiter einen Pilotleiter (520) einschließlich eines pulsbreitenmodulierten Signals (523) von der Elektrofahrzeug-Versorgungsausrüstung umfasst; und wobei der Rücksetzeingang (510) ein Ruhekontakt-Tastschalter (510) ist, der den Pilotleiter zurück zu der Elektrofahrzeug-Versorgungsausrüstung öffnet.

12. Fernsignalgeber (200; 300; 400) nach Anspruch 3, wobei die Anzahl der Steuerleiter einen Näherungsleiter (606) von einem Elektrofahrzeug zu der Elektrofahrzeug-Versorgungsausrüstung (601) umfasst; wobei der Rücksetzeingang (604) ein Ruhekontakt-Tastschalter ist, der den Näherungsleiter öffnet, und wobei der Näherungsleiter von der Elektrofahrzeug-Versorgungsausrüstung überwacht wird.

## Revendications

1. Dispositif d'annonce à distance (200 ; 300 ; 400) destiné à un équipement d'alimentation de véhicule électrique (500 ; 601 ; 700), le dispositif d'annonce à distance étant disposé à distance de l'équipement d'alimentation de véhicule électrique, dans ledit dispositif d'annonce à distance comprend :
une enceinte (210 ; 310 ; 410) ;
une interface (212 ; 318 ; 412) structurée pour être reliée électriquement audit équipement d'alimentation de véhicule électrique, dans lequel ladite interface est composée d'un certain nombre de conducteurs d'énergie (514, 516), d'un certain nombre de conducteurs de masse (518), et d'un certain nombre de conducteurs de commande (520, 606) qui comprennent un conducteur pilote (520) qui comprend un signal à modulation de durée d'impulsion (523) qui provient dudit équipement d'alimentation de véhicule électrique ;
une pluralité de témoins (202, 204, 206 ; 302, 304, 304 ; 402, 404, 406 ; 504, 506, 508) sur ladite enceinte, structurés pour assurer une fonction d'annonce à distance selon laquelle une annonce pour ledit équipement d'alimentation de véhicule électrique est fournie à distance de l'équipement d'alimentation de véhicule électrique ; et
un circuit (502 ; 703) structuré pour exciter lesdits témoins, le circuit comprenant un circuit de détection de modulation de durée d'impulsion (524) structuré pour détecter un cycle de fonctionnement du signal à modulation de durée d'impulsion sur le conducteur pilote,
dans lequel ledit nombre de conducteurs de commande possède une fonction de commande autre que l'excitation desdites témoins,
ledit dispositif d'annonce à distance étant **caractérisé en ce que** :
ledit circuit (502 ; 703) comprend en outre un circuit de détection de tension continue (526) structuré pour détecter une tension continue sur le conducteur pilote,
dans lequel ledit circuit excite lesdits témoins sur la base d'au moins l'un du cycle de fonctionnement détecté du signal à modulation de durée d'impulsion et de la tension continue détectée sur le conducteur pilote, et
ladite enceinte (210) forme un connecteur de véhicule électrique (214) ; et dans lequel ladite interface (212) est reliée électriquement à distance audit équipement d'alimentation de véhicule électrique, ou
ladite enceinte (310) forme un crochet de câble (312) destiné à un câble de véhicule électrique (314), ou un premier connecteur (412) pour ladite interface depuis ledit équipement d'alimentation de véhicule électrique et un second connecteur (414) destiné à un câble (314) et un connecteur (316) relié à un véhicule électrique, ou
ladite enceinte (310) comprend un connecteur (318) destiné à ladite interface depuis ledit équipement d'alimentation de véhicule électrique, ou ladite enceinte (410) forme une prise de véhicule électrique.

2. Dispositif d'annonce à distance (200 ; 300 ; 400) selon la revendication 1, dans lequel ledit circuit comprend une entrée de réinitialisation (510 ; 604) structurée pour réinitialiser ledit équipement d'alimentation de véhicule électrique.

3. Dispositif d'annonce à distance (200 ; 300 ; 400) selon la revendication 1, dans lequel ledit circuit (703) comprend une source d'énergie (704) qui comprend une tension dérivée indépendamment des conducteurs d'énergie de ladite interface.

4. Dispositif d'annonce à distance (200 ; 300 ; 400) selon la revendication 3, dans lequel la source d'énergie est une batterie (706) associée audit circuit ou une pluralité de conducteurs d'alimentation (708) distincts des conducteurs d'alimentation de ladite interface.

5. Dispositif d'annonce à distance (200 ; 300 ; 400) selon la revendication 1, dans lequel ledit nombre de conducteurs de masse comprend un conducteur de masse (518) ; et dans lequel ledit circuit comprend un circuit d'isolation (522) destiné au signal à modulation de durée d'impulsion et le conducteur de masse, un circuit de détection de tension alternative (528), et un circuit logique (530).

6. Dispositif d'annonce à distance (200 ; 300 ; 400) selon la revendication 5, dans lequel le nombre de conducteurs d'alimentation est d'au moins deux (514, 516) ; et dans lequel le circuit de détection de tension alternative est structuré pour détecter une tension alternative sur lesdits au moins deux conducteurs d'alimentation.

7. Dispositif d'annonce à distance (200 ; 300 ; 400) selon la revendication 5, dans lequel le circuit de détection de modulation de durée d'impulsion et le circuit de détection de tension continue sont reliés entre le circuit d'isolation et le circuit logique.

8. Dispositif d'annonce à distance (200 ; 300 ; 400) selon la revendication 5, dans lequel la pluralité de témoins est composée d'un témoin de défaillance (504), d'un témoin d'alimentation disponible (506), et d'un témoin de chargement (508) ; et dans lequel le circuit logique reçoit des entrées de la part du circuit de détection de modulation de durée d'impulsion, du circuit de détection de tension continue et du circuit de détection de tension alternative, et fournit des sorties au témoin de défaillance, au témoin d'alimentation disponible, et au témoin de chargement.

9. Dispositif d'annonce à distance (200 ; 300 ; 400) selon la revendication 8, dans lequel le circuit logique est structuré pour allumer le témoin de chargement lorsque le circuit de détection de tension alternative détecte une tension secteur non nulle sur les deux conducteurs d'alimentation ; pour allumer le témoin de chargement lorsque le circuit de détection de tension continue détecte une valeur de tension continue d'environ +6 VCC ou d'environ +3 VCC sur le conducteur pilote, et le circuit de détection de modulation de durée d'impulsion détecte une valeur de cycle de fonctionnement du signal à modulation de durée d'impulsion qui est différente de 0 % ou 100 % ; pour allumer le témoin d'alimentation disponible lorsque : (1) le circuit de détection de tension continue détecte une valeur de courant continu d'environ +12 VCC sur le conducteur pilote et le circuit de détection de modulation de durée d'impulsion détecte une valeur de cycle de fonctionnement du signal à modulation de durée d'impulsion de 0 % ou 100 % ; ou (2) le circuit de détection de tension continue détecte une valeur de tension continue d'environ +9 VCC sur le conducteur pilote et le circuit de détection de modulation de durée d'impulsion détecte une valeur de cycle de fonctionnement du signal à modulation de durée d'impulsion qui est différente de 0 % ou 100 % ; pour allumer le témoin de défaillance lorsque le circuit de détection de tension continue détecte une valeur de tension continue d'environ +9 VC, d'environ +6 VCC ou d'environ +3 VCC sur le conducteur pilote, et le circuit de détection de modulation de durée d'impulsion détecte une valeur de cycle de fonctionnement du signal à modulation de durée d'impulsion de 0 % ou 100 % ; pour éteindre le témoin de défaillance lorsque le circuit de détection de tension continue détecte une valeur de tension continue d'environ - 12 VCC sur le conducteur pilote ; ou pour activer un seul du témoin de défaillance, du témoin d'alimentation disponible et du témoin de chargement à n'importe quel moment.

10. Dispositif d'annonce à distance (200 ; 300 ; 400) selon la revendication 8, dans lequel le circuit logique est en outre structuré pour donner la priorité à l'activation du témoin de défaillance, du témoin d'alimentation disponible et du témoin de chargement en premier au témoin de défaillance, en second au témoin de chargement, et en troisième au témoin d'alimentation disponible ; ou dans lequel le circuit logique est structuré pour activer indépendamment n'importe quel nombre du témoin de défaillance, du témoin d'alimentation disponible et du témoin de chargement.

11. Dispositif d'annonce à distance (200 ; 300 ; 400) selon la revendication 3, dans lequel ledit nombre de conducteurs de commande comprend un conducteur pilote (520) qui comprend un signal à modulation de durée d'impulsion (523) qui provient de l'équipement d'alimentation de véhicule électrique ; et dans lequel l'entrée de réinitialisation (510) est un commutateur momentané et normalement fermé (510) qui rouvre le conducteur pilote vers ledit équipement d'alimentation de véhicule électrique.

12. Dispositif d'annonce à distance (200 ; 300 ; 400) selon la revendication 3, dans lequel ledit nombre de conducteurs de commande comprend un conducteur de proximité (606) entre un véhicule électrique et ledit équipement d'alimentation de véhicule électrique (601) ; dans lequel l'entrée de réinitialisation (604) est un commutateur momentané et normalement fermé qui ouvre le conducteur de proximité ; et dans lequel le conducteur de proximité est surveillé par ledit équipement d'alimentation de véhicule électrique.
